# EUROPÄISCHE PATENTSCHRIFT

(11) **EP 4 153 814 B1**
(45) Veröffentlichungstag und Bekanntmachung des Hinweises auf die Patenterteilung: **31.07.2024**
(21) Anmeldenummer: 21721449.3
(22) Anmeldetag: 21.04.2021
(51) Int. Cl.: E01B 27/16

(54) **SYSTEM UND VERFAHREN ZUM BEARBEITEN EINES GLEISES MIT EINER GLEISBAUMASCHINE**
SYSTEM AND METHOD FOR PROCESSING A TRACK BY MEANS OF A TRACK CONSTRUCTION MACHINE
SYSTÈME ET PROCÉDÉ D'EXPLOITATION D'UNE VOIE FERRÉE AU MOYEN D'UNE MACHINE DE CONSTRUCTION DE VOIE FERRÉE

(30) Priorität: 19.05.2020 AT 504382020
(43) Veröffentlichungstag der Anmeldung: 29.03.2023
(73) Patentinhaber: Plasser & Theurer Export von Bahnbaumaschinen Gesellschaft m.b.H., 1010 Wien (AT)
(72) Erfinder: FREUDENTHALER, Klaus, 4211 Alberndorf in der Riedmark (AT); MATZINGER, Nikolaus, 4181 Oberneukirchen (AT); BÜRGER, Martin, 4030 Linz (AT); ZAUNER, Gerald, 4073 Wilhering (AT)
(86) Internationale Anmeldenummer: PCT/EP2021/060393
(87) Internationale Veröffentlichungsnummer: WO 2021/233637

(56) Entgegenhaltungen:
- WO-A1-2020/052879
- AT-A4- 519 739
- DE-A1- 2 818 405

## Beschreibung

### Gebiet der Technik

Die Erfindung betrifft ein Steuerungs- und Bedienungssystem zum Bearbeiten eines Gleises mit einer Gleisbaumaschine, mit wenigstens einem auf Schienenfahrwerken verfahrbaren Maschinenrahmen, das Steuerungs- und Bedienungssystem ferner umfassend Arbeitsvorrichtungen, ein Sensor- und Messsystem zur Bestimmung der Lagedaten der Arbeitsvorrichtungen sowie zur Erkennung von Objekten des Gleises, insbesondere Schwellen, Schienen und gegebenenfalls Hindernisse, weiters umfassend eine Anordnung aus Kameras zur optischen Erfassung der Arbeitsvorrichtungen und der Arbeitsbereiche. Zudem betrifft die Erfindung ein Verfahren zum Betreiben des Systems.

### Stand der Technik

Universalstopfmaschinen, darunter versteht man Gleisbaumaschinen, die sowohl zum Unterstopfen gerader Gleisabschnitte, wie auch zum Unterstopfen von Weichenabschnitten eingesetzt werden. Um letzteren Anwendungsbereich bewerkstelligen zu können, sind besondere Bauarten von Arbeitsaggregaten, wie auch Zusatzeinrichtungen erforderlich. Der Aufwand in der Bedienung und Steuerung einer solchen Maschine ist erheblich größer und erfordert neben einer umfangreichen Ausbildung eine entsprechende Einarbeitung und Schulung.

Eine solche Gleisbaumaschine besteht in der Regel aus zwei Fahrkabinen und zwei Arbeitskabinen. Den Bedienerbereich stellen somit zwei örtlich getrennte Arbeitsplätze zum Bedienen der jeweiligen Aggregate und Vorrichtungen dar. Durch die Komplexität und den Aufbau der Maschinen ist für den Bediener nicht immer oder teilweise nur begrenzt ein Einblick in die unterschiedlichen Arbeitsbereiche gegeben. Aufgrund der beiden getrennten Arbeitskabinen müssen die Bediener über eine Sprechanlage miteinander kommunizieren.

Für einen möglichst guten, wenn auch begrenzten Einblick in den Arbeitsprozess müssen die Arbeitskabinen sehr nahe an den Arbeitsaggregaten positioniert sein. Dies führt zu begrenzten Bauräumen und es müssen beengende, ergonomisch wenig ausgeprägte Arbeitssituationen für die Bediener bei zusätzlich erhöhtem Risiko zur Fehlbedienung hingenommen werden. Hinzu kommen gefährliche Kabinenzugänge, da die Kabinen auch auf teilweise mitbewegten Maschinenvorrichtungen angeordnet sind. Es besteht erhöhte Quetschgefahr, ein Zugang ist nur bei Stillstand der Maschine und der Arbeitsvorrichtungen möglich. Durch diese nahe Anordnung der Kabine im Arbeitsbereich ist der Bediener durch ständige Beschleunigungsvorgänge, Vibrationen und Erschütterungen einer hohen körperlichen Belastung ausgesetzt.

Die AT 519 739 A4 beschreibt ein Verfahren zum Steuern einer Gleisbaumaschine, insbesondere einer Weichenstopf- bzw. Universalstopfmaschine, wobei mittels einer Sensoreinrichtung Lagedaten von Gleisobjekten (Schwellen, Schienen, Hindernisse) erfasst werden. Eine Kamera ist auf die Arbeitsaggregate der Maschine gerichtet, um Echtzeitaufnahmen an eine Anzeigevorrichtung in einer Bedienerkabine zu übertragen. Weiters werden die Arbeitsstellungen der Arbeitsaggregate von einer Sensoreinrichtung ermittelt und ebenso in der Anzeigevorrichtung angezeigt, so dass noch vor einer Durchführung des Arbeitsvorgangs die Arbeitsstellungen der Arbeitsaggregate über Bedienelemente veränderbar sind. Systeme und Verfahren zur Steuerung einer entsprechenden Gleisbaumaschine sind auch aus der WO 2020/052879 A1 und aus der DE 2818405 A1 bekannt.

### Zusammenfassung der Erfindung

Der Erfindung liegen die Aufgaben zugrunde, für eine Gleisbaumaschine der eingangs genannten Art eine höhere Flexibilität im Arbeitseinsatz und eine Erweiterung der Steuerungs-/Bedienungsmöglichkeiten, sowie eine verbesserte Unterstützung des Bedienpersonals gegenüber dem Stand der Technik anzugeben. Des Weiteren soll eine deutliche Steigerung der Sicherheit und Ergonomie am Arbeitsplatz erreicht werden. Zudem wird ein mittels des Systems durchgeführtes Verfahren zum Bearbeiten eines Gleises angegeben.

Erfindungsgemäß werden diese Aufgaben gelöst durch ein System gemäß Anspruch 1 und ein Verfahren gemäß Anspruch 10. Abhängige Ansprüche betreffen vorteilhafte Ausgestaltungen der Erfindung.

Dabei ist vorgesehen, dass ein Bedienplatz unabhängig vom visuellen Einblick des Bedieners auf den Arbeitsbereich und ohne einen freien Sichtbereich auf eine jeweilige Arbeitsvorrichtung an einem Ort innerhalb oder außerhalb der Gleisbaumaschine eingerichtet ist und dass der Bedienplatz eine Anzeigeeinrichtung für eine virtuelle Bedienung, Steuerung und/oder Überwachung der Gleisbaumaschine umfasst. Eine vom visuellen Einblick des Bedieners auf die jeweilige Arbeitsvorrichtung und den Arbeitsbereich unabhängige Platzierung des Bedienplatzes bietet die Nutzung deutlich größerer Räumlichkeiten und/oder Kabinen als Arbeitsplatz für Maschinenbediener. Bessere Gestaltungsmöglichkeiten sorgen für eine erhebliche Steigerung von Komfort und Ergonomie des Arbeitsplatzes, auch wird dadurch das Risiko zur Fehlbedienung durch den Bediener reduziert. Bei einer klassischen Anordnung als Bestandteil der Gleisbaumaschine selbst, wird für das Bedienpersonal nun bei nahezu allen Maschinenvarianten ein sicherer Zugang zum Arbeitsplatz außerhalb der Gefahrenbereiche gewährleistet.

Unter dem umfassenden Begriff einer Arbeitsvorrichtung werden sowohl komplexe Aggregate, wie etwa Stopfaggregate zum Unterstopfen des Gleises, Verdichtungsaggregate zum Verdichten des Schotteroberbaus, als auch einfachere Vorrichtungen, beispielsweise Hebehaken oder Räumschilder zur Schüttgutverteilung, bis hin zu Förder- und Antriebseinrichtungen betrachtet.

In einer Weiterbildung ist vorgesehen, dass der Bedienplatz eine Anzeigeeinrichtung umfasst, die zur Anzeige von Video-/Bildaufnahmen und/oder zusätzlichen Informationen zur Bedienerunterstützung eingerichtet ist. Damit erhält der Bediener durch Echtzeitaufnahmen einen freien Blick auf Arbeitsvorrichtungen und Arbeitsbereiche. Wahlweise kann zwischen unterschiedlichen Ansichten und Darstellungen gewählt werden. Zusätzlich wird dem Bediener unterstützende Information für die jeweils aktiv im Einsatz befindlichen Arbeitsvorrichtungen angezeigt. Dies sind beispielsweise grafische Markierungen von Hindernissen im Arbeitsbereich, mögliche Verfahrwege von Arbeitsvorrichtungen und Werkzeugen, Grenzwerte für Arbeitsprozesse, Warnungen, Hinweise und Einblendungen jeglicher Art.

Eine Ausgestaltung sieht vor, dass die Anzeigeeinrichtung aus wenigstens einem Industrie-Panel, einem Flachbildmonitor und/oder einem Videoprojektor ausgeführt ist.

Bevorzugt kommen hier Industrie-Panels oder Flachbildmonitore zum Einsatz, da diese trotz eventuell beeinflussender Umgebungssituationen wie direkt einfallendem Sonnen-/Tageslicht oder Spiegelungen eine gute Bildwiedergabe liefern. Wenn es die Platzverhältnisse am Bedienplatz, eine gewünschte Flexibilität bei vielfältig genutzten Räumlichkeiten, oder nur temporäre Nutzung für Arbeitseinsätze erfordern, so werden auch Videoprojektoren als Anzeigeeinrichtung eingesetzt.

Dabei ist es günstig, wenn die Anzeigeeinrichtung über Industrie-Panels und/oder Flachbildmonitore mit Touch-Screen-Funktionalität für Bedienereingaben ausgeführt ist. Eine solche Eingabemöglichkeit bietet dem Bediener neben anderen Bedienelementen bei nahe am Bedienplatz in Griffweite angeordneten Anzeigeeinrichtungen eine zusätzliche, intuitive Auswahl und/oder Eingabe von Werten und/oder vordefinierten Befehlen. So erfolgt etwa eine Quittierung von Hinweisen, Einstellung von Maschinenparametern, oder Auswahl von virtuell definierten Arbeitsbereichen.

Vorteilshaft ist es, wenn der Bedienplatz neben Bedienelementen mit Sitzplätzen für zwei Maschinenbediener eingerichtet ist.

Größere Gleisbaumaschinen bis hin zu umfangreichen Umbau- und Instandhaltungszügen erfordern im Vollbetrieb aufgrund der hohen Funktionalität mehrere Bediener. So werden unabhängig vom jeweils gewählten Sitzplatz aus unterschiedliche Arbeitsvorrichtungen bedient. Das bedeutet, dass derselbe Arbeitsprozess sowohl alleine von dem einen Sitzplatz, wie auch alleine von dem anderen Sitzplatz, oder auch von beiden Sitzplätzen gemeinsam bedient werden kann. Weiters bietet diese Ausführung des Bedienplatzes für neues Bedienpersonal im Ausbildungs- und Einschulungsbetrieb besondere Vorteile. Als Beispiel sei in Arbeitsprozessen ein paralleles, unterstützendes Eingreifen durch einen zweiten Bediener genannt. Eine vormals aufgrund getrennter Arbeitskabinen auf Gleisbaumaschinen erforderliche Sprechanlage zur Kommunikation unter den Bedienern ist nicht mehr erforderlich. Die Konzentration mehrerer Sitzplätze und Bedienelemente an nur einem Bedienplatz zeichnet sich auch durch Einsparungen bei den Herstellkosten aus. Aufwendige Verkabelungsarbeiten zwischen voneinander getrennten Bedienerplätzen werden hinfällig und erhebliche Materialeinsparungen erreicht. Analog dazu ist es auch sinnvoll IT-Kernkomponenten wie Computersysteme, Rechen- und Steuereinheiten zentral am selben Ort einzurichten.

Eine weitere Lösung sieht vor, dass der Bedienplatz neben Bedienelementen mit einem Sitzplatz für einen einzigen Maschinenbediener eingerichtet ist. Wenn es der Maschinentyp oder ein eingeschränkter Bedienort erfordert, steht nur ein Sitzplatz zur Verfügung. In anderen Fällen werden zwei oder mehr Bedienerplätze mit nur je einem Sitzplatz an unterschiedlichen Orten betrieben.

In einer sinnvollen Weiterbildung werden die Kameras zur optischen Erfassung der Arbeitsvorrichtungen und der Arbeitsbereiche mit einer Recheneinheit und diese weiter mittels eines übergeordneten Computersystems an eine Maschinensteuerung gekoppelt.

Dies erlaubt eine Erfassung größerer Bild-/Videoausschnitte ohne verdeckte oder schlecht einsehbare Bereiche. Dabei erfolgt eine Entzerrung der einzelnen Kamerabilder, oder auch einer zusammengefügten, realistischen Gesamtdarstellung der Arbeitsvorrichtung und/oder des Arbeitsbereiches.

Weiters ist es vorteilhaft, wenn die Kameras zur optischen Erfassung als sogenannte 3D-Kameras ausgeführt sind. Mit 3D-Kameras wird die Größe von Objekten und deren Lage im Raum erfasst. Somit werden unterstützend oder alternativ zum Sensor- und Messsystem etwa die Gleislage und/oder Hindernisse im Arbeitsbereich ermittelt. Die Aufnahmen der 3D-Kameras können zu einem 3D-Modell, einem sogenannten Digital Twin, fusioniert werden, welcher dem Bediener zusätzlich die Möglichkeit bietet die Perspektive selbst zu wählen und jederzeit im Betrieb zu ändern.

Eine Ausgestaltung zum Informations- und Datenaustausch für die Steuerung, Bedienung und Überwachung der Gleisbaumaschine zwischen dem Bedienplatz und dem übergeordneten Computersystem umfasst eine gesicherte Übertragungsform, insbesondere einen VPN-Tunnel über einen VPN-Router. Für einen sicheren, geschützten Fernzugriff auf die Maschine wird vorzugsweise eine stabile Verbindung mittels VPN-Tunnel gewählt. Besonders hilfreich ist diese bei einem Bedienplatz in einer von der Gleisbaumaschine entfernt angeordneten Systemzentrale.

Beim erfindungsgemäßen Verfahren zum Betreiben des Systems wird die Gleisbaumaschine über einen Bedienplatz virtuell bedient, gesteuert und/oder überwacht. Dies ermöglicht einem oder mehreren Bedienern in vollem Umfang das Steuern und Überwachen der Gleisbaumaschine mit all ihren Arbeitsvorrichtungen und Arbeitsbereichen. Die Einrichtung des Bedienplatzes ist an einem beliebigen Ort möglich.

In einer Weiterbildung des Verfahrens ist vorgesehen, dass am Bedienplatz über die Anzeigeeinrichtung nach Erfassung der Video-/Bildaufnahmen durch die Kameras eine über die Recheneinheit zusammengefügte, korrigierte, sowie entzerrte Darstellung der Arbeitsvorrichtungen angezeigt wird. Damit erhält der Bediener eine zusammenhängende, realitätsnahe Abbildung der jeweiligen Arbeitssituation und hat sowohl die Arbeitsvorrichtungen als auch Arbeitsbereiche im Blickfeld. Mit dieser Form der Aufbereitung der Video- /Bildaufnahmen wird eine bessere Wahrnehmungsfähigkeit von Tiefeninformation erreicht.

Es ist vorteilhaft, wenn am Bedienplatz über die Anzeigeeinrichtung die Video-/Bildaufnahmen der Kameras in Echtzeit angezeigt werden. Dies ermöglicht ein schnelles Erkennen und Reagieren bei der Steuerung und Überwachung der Arbeitsprozesse.

Eine weitere Ausprägung des Verfahrens sieht vor, dass am Bedienplatz über die Anzeigeeinrichtung zur Bedienerunterstützung zusätzliche Informationen, Hinweise, und/oder Warnungen zum laufenden Arbeitsprozess in Textform, Symbolform und/oder grafisch aufbereiteter Darstellung jeglicher Art eingeblendet werden. Durch diese Ergänzung der Echtzeitinformation wird dem Bediener im laufenden Arbeitsprozess zusätzliche Unterstützung geboten, die Wahrscheinlichkeit einer Fehlbedienung der Maschine wird deutlich reduziert. Die Einblendungen heben beispielsweise kritische Maschinen- und Prozessparameter hervor, oder markieren besondere Stellen im abgebildeten Arbeitsbereich, die ein manuelles Eingreifen oder Quittieren durch den Bediener erfordern.

In einer Ausgestaltung ist weiters sinnvoll, wenn über die vom Sensor- und Messsystem erfassten Lagedaten durch ein übergeordnetes Computersystem ausgewertet und mit Vorgabewerten verglichen werden und dass durch einen Algorithmus über die Maschinensteuerung eine vollautomatische Ansteuerung der Arbeitsvorrichtungen durchgeführt wird. Je nach Maschinentype und jeweiliger Arbeitsvorrichtung werden unterschiedliche Istwerte ermittelt, das können vielfältige Informationen über Position, Lage oder Status der Arbeitsvorrichtung wie auch Parameter des Arbeitsprozesses sein, und mit hinterlegten Sollwerten abgeglichen. Im vollautomatischen Betrieb steuert der Algorithmus nach Auswertung der Daten die Arbeitsvorrichtung direkt ohne Zutun des Bedieners an. Werden vom System Unregelmäßigkeiten, wie etwa Hindernisse im Arbeitsbereich erkannt oder Parametergrenzwerte erreicht, so wird der Arbeitsprozess umgehend gestoppt und die Maschine zum Stillstand gebracht.

Eine Weiterbildung sieht vor, dass über die vom Sensor- und Messsystem erfassten Lagedaten durch ein übergeordnetes Computersystem ausgewertet und mit Vorgabewerten verglichen werden und dass durch einen Algorithmus die nächstfolgenden Arbeitsschritte der Arbeitsvorrichtungen auf der Anzeigeeinrichtung in Textform und/oder grafischer Form darstellt und erst nach Bestätigung und/oder Abänderung durch den Bediener von der Maschinensteuerung durch entsprechende Ansteuerung der Arbeitsvorrichtungen durchgeführt werden. Dadurch ist eine Überprüfung des anstehenden Arbeitsprozesses und der ermittelten Arbeitsstellungen möglich, ohne dabei auf die Vorteile der automatisierten Ansteuerung der Arbeitsaggregate zu verzichten. Bei Bedarf ist auf diese Weise durch den Bediener ein korrigierender Eingriff möglich.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
Fig. 1 Seitenansicht einer Gleisbaumaschine zum Bearbeiten eines Gleises mit bisheriger Anordnung der Bedienerkabine (Stand der Technik)
Fig. 2 Seitenansicht einer Gleisbaumaschine zum Bearbeiten eines Gleises mit neuer Anordnung des Bedienplatzes
Fig. 3 Blockschaltbild Systemaufbau

### Beschreibung der Ausführungsformen

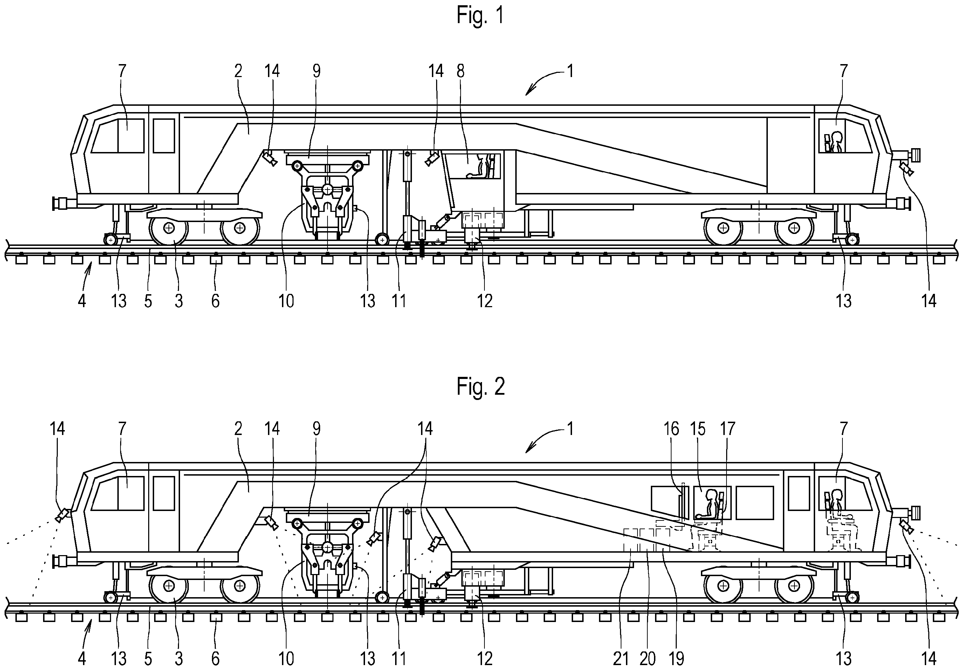

Die in Fig. 1 dargestellte Gleisbaumaschine 1 stellt den Stand der Technik einer diskontinuierlich arbeitenden Gleisstopfmaschine zum Stopfen eines Gleises 4 dar. Als Gleis wird allgemein die Gesamtheit aus Schienen 5, Schwellen 6, Oberbau, Schotter, Weichenteilen, Oberleitungs- und Signaleinrichtungen verstanden. Für die vorliegende Erfindung ist im Zusammenhang mit diversen Gleisbaumaschinen neben einem Schotteroberbau auch die zweite Variante der Oberbaukonstruktion, die sogenannte feste Fahrbahn, relevant.

Alternativ zum in Fig. 1 dargestellten Beispiel stützt sich bei einer kontinuierlich arbeitenden Gleisstopfmaschine ein Fahrzeugrahmen auf den Schienenfahrwerken 3 ab und ein beweglicher Satellit umfasst den Maschinenrahmen 2. An den beiden Stirnseiten ist jeweils eine Fahrerkabine 7 angeordnet. In einer einfachen Variante der vorliegenden Gleisbaumaschine 1 ist eine Bedienerkabine 8 mit Blick auf gegenüber dem Maschinenrahmen 2 verstellbar angeordneten Arbeitsvorrichtungen A vorgesehen. Dennoch sind nicht alle Arbeitsvorrichtungen A und Arbeitsbereiche vollständig vom Bedienpersonal aus der Bedienerkabine 8 einsehbar. Als Arbeitsbereich wird jener Bereich definiert, in dem die jeweilige Arbeitsvorrichtung 9, 10, 11, 12 in ihrer Lage und Position frei manipulierbar ist.

Die dargestellte Maschinenausführung umfasst als Arbeitsvorrichtungen A eine dreh- und verschiebbare Aggregataufhängung 9, ein Stopfaggregat 10, ein Hebe- und Richtaggregat 11 sowie ein Zusatzhebeaggregat 12 für eine Bearbeitung von Weichen. Bei größeren Gleisbaumaschinen oder umfangreichen Gleisumbau-/Sanierungszügen kommen neben weiteren Arbeitsvorrichtungen auch zusätzliche Bedienerkabinen zum Einsatz. Eine einfache Anordnung von Kameras 14 ist im Bereich der Arbeitsvorrichtungen A eingerichtet, so auch an der in Arbeitsrichtung gesehen vorderen Stirnseite der Gleisbaumaschine 1, das ist in der Figurendarstellung die rechte Stirnseite. Mit den Kameras 14 werden begrenzte Teile der Arbeitsbereiche und des Gleises 4 erfasst und an die Bedienerkabine 8 übertragen. Ein verbautes Sensor- und Messsystem 13 erfasst einerseits die Gleisgeometrie, aber auch sämtliche Objekte am Gleis 4, insbesondere die Schienen 5, Schwellen 6 sowie mögliche Hindernisse im Arbeitsbereich. Über das Sensor- und Messsystem 13 werden auch Betriebsparameter und Lagepositionen der Arbeitsvorrichtungen A ermittelt.

In Fig. 2 entfällt die in Fig. 1 im Bereich der Arbeitsvorrichtungen A angeordnete Bedienerkabine 8. Die Maschinenausstattung betreffend der Arbeitsvorrichtungen A ist ident mit der Gleisbaumaschine 1 in Fig. 1 ausgeführt. Durch den Entfall der Bedienerkabine 8 ist nun für das Bedienpersonal ein sicherer und komfortabler Bedienplatz 15 im geschützten Innenbereich der Gleisbaumaschine 1 eingerichtet. Um diesen Bedienplatz 15 sind unter anderem eine Anzeigeeinrichtung 16, ein Sitzplatz 17 und Bedienelemente 18 so angeordnet, dass diese vom Bediener ergonomisch bedient bzw. betätigt werden können. Bei umfangreicheren Gleisbaumaschinen kann dieser Bedienplatz 15 auch zwei oder mehrere Sitzplätze 17 umfassen. Eine erweiterte Anordnung aus Kameras 14 bildet sämtliche Arbeitsbereiche und beide Stirnseiten der Gleisbaumaschine 1 ab und übermittelt diese Video-/Bilddaten an eine zentral angeordnete Recheneinheit 19. Ebenso sind dort eine Maschinensteuerung 20 und ein übergeordnetes Computersystem 21 zentral platziert.

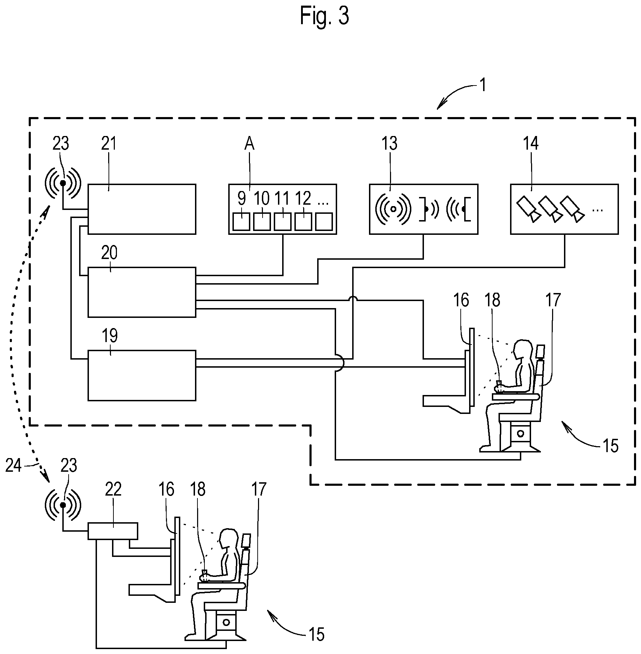

Ein Blockschaltbild des Systemaufbaus beschreibt in Fig. 3 das Zusammenwirken der Systemkomponenten. Ausgehend vom Bedienplatz 15 ist vorzugsweise für den Bediener eine Touch-Screen-Eingabefunktion der Anzeigeeinrichtung 16 gegeben. In diesem Fall sind die Anzeigeeinrichtung 16, so wie auch die Bedienelemente 18 am Bedienplatz 15 zur Eingabe von Steuer- und Bedienbefehlen mit der Maschinensteuerung 20 gekoppelt. Die Ausführung der Bedienelemente 18 ist vielfältig, hier können mehrachsige, joystickartige Eingabeinstrumente, Schalter, Taster, Touch-Elemente und/oder Tastaturen eingesetzt werden. Aus den Kameras 14 gewonnene Video-/Bilddaten werden je nach Vorgabe des Bedieners als unbearbeitete, oder als bearbeitete (z.B. zusammengefügte und entzerrte) Videoinformation in nahezu Echtzeit an die Anzeigevorrichtung 16 übermittelt. Die Kameras 14 können je nach Erfordernis in manchen Einsatzländern mit besonders hoher Sonneneinstrahlung als sogenannte HDR-Kameras (High Dynamic Range) oder xHDR-Kameras ausgeführt sein. Diese Bauart kann große Helligkeitsunterschiede im zu erfassenden Bildbereich besser als das menschliche Auge ausgleichen. Das Resultat sind kontrastreiche Bildaufnahmen mit hohem Informationsgehalt.

Die Komponenten des Sensor- und Messsystems 13 sind mit der Maschinensteuerung 20 und weiters mit dem übergeordneten Computersystem 21 gekoppelt, wo sämtliche erhaltenen Informationen zum laufenden Arbeitsprozess durch Algorithmen verarbeitet und ausgewertet werden. Zur Ansteuerung und Überwachung der Arbeitsvorrichtungen A sind diese an die Maschinensteuerung 20 gekoppelt, wobei die Ansteuerung entweder im manuellen Betrieb direkt vom Bediener über die Bedienelemente 18, oder im Automatikbetrieb von der Maschinensteuerung 20 und/oder dem übergeordneten Computersystem 21 direkt erfolgt. Sowohl die Recheneinheit 19, als auch die Maschinensteuerung 20 sind jeweils direkt an das übergeordnete Computersystem 21 als höchste Instanz angebunden.

Die über die Anzeigeeinrichtung 16 als Bedienerunterstützung ergänzend zu den Echtzeitaufnahmen eingeblendeten Informationen zum laufenden bzw. anstehenden Arbeitsprozess (z.B. Warnhinweise, grafisch aufbereitete Darstellung) nehmen ihren Ursprung im übergeordneten Computersystem 21. Dort werden die von den Kameras 14 und dem Sensor- und Messsystem 13 eingespeisten Daten und Signale (z.B. ein erkanntes Hindernis) verarbeitet. Das Resultat dieser Auswertung wird über die Recheneinheit 19 an die Anzeigeeinrichtung 16 ausgegeben und dort dem Bediener entsprechend als Bild- bzw. Video-Overlay überlagert dargestellt.

Bei einem außerhalb der Gleisbaumaschine 1 angeordneten Bedienplatz 15 werden sämtliche zur Bedienung, Steuerung und Anzeige erforderlichen Informations- und Datenströme in einem Client 22 erfasst und bidirektional über eine Datenverbindung 24 mit dem übergeordneten Computersystem 21 der Gleisbaumaschine 1 gekoppelt. Diese Koppelung erfolgt vorzugsweise über eine gesicherten VPN-Tunnelverbindung zwischen zwei Übertragungseinheiten 23.

## Patentansprüche

1. Steuerungs- und Bedienungssystem zum Bearbeiten eines Gleises (4) mit einer Gleisbaumaschine (1), mit wenigstens einem auf Schienenfahrwerken (3) verfahrbaren Maschinenrahmen (2), das Steuerungs- und Bedienungssystem ferner umfassend Arbeitsvorrichtungen (A, 9, 10, 11, 12), ein Sensor- und Messsystem (13) zur Bestimmung der Lagedaten der Arbeitsvorrichtungen (A, 9, 10, 11, 12) sowie zur Erkennung von Objekten des Gleises (4), insbesondere Schwellen (6), Schienen (5) und gegebenenfalls Hindernisse, weiters umfassend eine Anordnung aus Kameras (14) zur optischen Erfassung der Arbeitsvorrichtungen (A, 9, 10, 11, 12) und der Arbeitsbereiche, **dadurch gekennzeichnet, dass** ein Bedienplatz (15) unabhängig vom visuellen Einblick des Bedieners auf den Arbeitsbereich und ohne einen freien Sichtbereich auf eine jeweilige Arbeitsvorrichtung (A, 9, 10, 11, 12) an einem Ort innerhalb oder außerhalb der Gleisbaumaschine (1) eingerichtet ist und dass der Bedienplatz (15) eine Anzeigeeinrichtung (16) für eine virtuelle Bedienung, Steuerung und/oder Überwachung der Gleisbaumaschine (1) umfasst.

2. System nach Anspruch 1, **dadurch gekennzeichnet, dass** der Bedienplatz (15) eine Anzeigeeinrichtung (16) umfasst, die zur Anzeige von Video- /Bildaufnahmen und/oder zusätzlichen Informationen zur Bedienerunterstützung eingerichtet ist.

3. System nach Anspruch 2, **dadurch gekennzeichnet, dass** die Anzeigeeinrichtung (16) aus wenigstens einem Industrie-Panel, einem Flachbildmonitor und/oder einem Videoprojektor ausgeführt ist.

4. System nach Anspruch 3, **dadurch gekennzeichnet, dass** die Anzeigeeinrichtung (16) über Industrie-Panels und/oder Flachbildmonitore mit Touch-Screen-Funktionalität für Bedienereingaben ausgeführt ist.

5. System nach einem der Ansprüche 1 bis 4, **dadurch gekennzeichnet, dass** der Bedienplatz (15) neben Bedienelementen (18) mit Sitzplätzen (17) für zwei Maschinenbediener eingerichtet ist.

6. System nach einem der Ansprüche 1 bis 4, **dadurch gekennzeichnet, dass** der Bedienplatz (15) neben Bedienelementen (18) mit einem Sitzplatz (17) für einen einzigen Maschinenbediener eingerichtet ist.

7. System nach einem der Ansprüche 1 bis 6, **dadurch gekennzeichnet, dass** die Kameras (14) zur optischen Erfassung der Arbeitsvorrichtungen (A, 9, 10, 11, 12) und der Arbeitsbereiche mit einer Recheneinheit (19) und diese weiter mittels eines übergeordneten Computersystems (21) an eine Maschinensteuerung (20) gekoppelt sind.

8. System nach einem der Ansprüche 1 bis 7, **dadurch gekennzeichnet, dass** die Kameras (14) zur optischen Erfassung als sogenannte 3D-Kameras ausgeführt sind.

9. System nach einem der Ansprüche 1 bis 8, **dadurch gekennzeichnet, dass** zum Informations- und Datenaustausch für die Steuerung, Bedienung und Überwachung der Gleisbaumaschine (1) zwischen dem Bedienplatz (15) und dem übergeordneten Computersystem (21) eine gesicherte Übertragungsform, insbesondere ein VPN-Tunnel über einen VPN-Router eingerichtet ist.

10. Verfahren zum Betreiben eines Systems nach einem der Ansprüche 1 bis 9, **dadurch gekennzeichnet, dass** die Gleisbaumaschine (1) über einen Bedienplatz (15) virtuell bedient, gesteuert und/oder überwacht wird.

11. Verfahren nach Anspruch 10, **dadurch gekennzeichnet, dass** am Bedienplatz (15) über die Anzeigeeinrichtung (16) nach Erfassung der Video-/Bildaufnahmen durch die Kameras (14) eine über die Recheneinheit (19) zusammengefügte, korrigierte, sowie entzerrte Darstellung der Arbeitsvorrichtungen (A, 9, 10, 11, 12) angezeigt wird.

12. Verfahren nach einem der Ansprüche 10 oder 11, **dadurch gekennzeichnet, dass** am Bedienplatz (15) über die Anzeigeeinrichtung (16) die Video- /Bildaufnahmen der Kameras (15) in Echtzeit angezeigt werden.

13. Verfahren nach einem der Ansprüche 10 bis 12, **dadurch gekennzeichnet, dass** am Bedienplatz (15) über die Anzeigeeinrichtung (16) zur Bedienerunterstützung zusätzliche Informationen, Hinweise, und/oder Warnungen zum laufenden Arbeitsprozess in Textform, Symbolform und/oder grafisch aufbereiteter Darstellung jeglicher Art eingeblendet werden.

14. Verfahren nach einem der Ansprüche 10 bis 13, **dadurch gekennzeichnet, dass** über die vom Sensor- und Messsystem (13) erfassten Lagedaten durch ein übergeordnetes Computersystem (21) ausgewertet und mit Vorgabewerten verglichen werden und dass durch einen Algorithmus über die Maschinensteuerung (20) eine vollautomatische Ansteuerung der Arbeitsvorrichtungen (A, 9, 10, 11, 12) durchgeführt wird.

15. Verfahren nach einem der Ansprüche 10 bis 13, **dadurch gekennzeichnet, dass** über die vom Sensor- und Messsystem (13) erfassten Lagedaten durch ein übergeordnetes Computersystem (21) ausgewertet und mit Vorgabewerten verglichen werden und dass durch einen Algorithmus die nächstfolgenden Arbeitsschritte der Arbeitsvorrichtungen (A, 9, 10, 11, 12) auf der Anzeigeeinrichtung (16) in Textform und/oder grafischer Form darstellt und erst nach Bestätigung und/oder Abänderung durch den Bediener von der Maschinensteuerung (20) durch entsprechende Ansteuerung der Arbeitsvorrichtungen (A, 9, 10, 11, 12) durchgeführt werden.

## Claims

1. A control and operating system for working on a track (4) with a track maintenance machine (1), with at least one machine frame (2) movable on rail-based running gears (3), the control and operating system furthermore comprising working devices (A, 9, 10, 11, 12), a sensor and measuring system (13) for recording the position data of the working devices (A, 9, 10, 11, 12) and for detecting objects of the track (4), in particular sleepers (6), rails (5), and, as the case may be, obstacles, and further comprising an arrangement of cameras (14) for optical detection of the working devices (A, 9, 10, 11, 12) and the working areas, **characterised in that** a control station (15) independently of the operator's view of the working area and without free visual range of a respective working device (A, 9, 10, 11, 12) is set up at a location inside or outside the track maintenance machine (1) and **in that** the control station (15) comprises a display device (16) for virtual operation, control, and/or monitoring of the track maintenance machine (1).

2. A system according to claim 1, **characterised in that** the control station (15) comprises a display device (16) that is set up to display video/image recordings and/or additional information for supporting the operator.

3. A system according to claim 2, **characterised in that** the display device (16) is designed with at least one industrial panel, a flat screen monitor, and/or a video projector.

4. A system according to claim 3, **characterised in that** the display device (16) is designed with industrial panels and/or flat screen monitors with touch screen functionality for operator input.

5. A system according to one of the claims 1 to 4, **characterised in that** the control station (15) is equipped with seats (17) for two machine operators in addition to operating elements (18).

6. A system according to one of the claims 1 to 4, **characterised in that** the control station (15) is set up with a seat (17) for one single machine operator in addition to operating elements (18).

7. A system according to one of the claims 1 to 6, **characterised in that** the cameras (14) for optical detection of the working devices (A, 9, 10, 11, 12) and the working areas are coupled with a computing unit (19), which is further coupled to a machine control (20) by means of a higher-level computer system (21).

8. A system according to one of the claims 1 to 7, **characterised in that** the cameras (14) for optical detection are designed as so-called 3D cameras.

9. A system according to one of the claims 1 to 8, **characterised in that** a secure form of transmission, in particular a VPN tunnel via a VPN router is set up for exchanging information and data between the control station (15) and the higher-level computer system (21) to control, operate, and monitor the track maintenance machine (1).

10. A method for operating a system according to one of the claims 1 to 9, **characterised in that** the track maintenance machine (1) is operated, controlled, and/or monitored virtually via a control station (15).

11. A method according to claim 10, **characterised in that** after the video/image recordings have been captured by the cameras (14), a representation of the working devices (A, 9, 10, 11, 12), which has been assembled, rectified, and distortion-corrected by the computing unit (19), is displayed at the control station via the display device (16).

12. A method according to one of the claims 10 or 11, **characterised in that** the video/image recordings of the cameras (14) are displayed in real time at the control station (15) via the display device (16).

13. A method according to one of the claims 10 to 12, **characterised in that** additional information, indications, and/or warnings on the ongoing work process are displayed as text, symbols, and/or graphic representations of any kind at the control station (15) via the display device (16) to support the operator.

14. A method according to one of the claims 10 to 13, **characterised in that** the position data recorded by the sensor and measuring system (13) is evaluated by a higher-level computer system (21) and compared with preset values and that a fully automatic actuation of the working devices (A, 9, 10, 11, 12) is carried out by an algorithm via the machine control (20).

15. A method according to one of the claims 10 to 13, **characterised in that** the position data recorded by the sensor and measuring system (13) are evaluated by a higher-level computer system (21) and compared with preset values, and **in that** the following work steps of the working devices (A, 9, 10, 11, 12) are displayed as text and/or in graphic form on the display device (16) by an algorithm, with these steps being carried out only after the operator's confirmation and/or modification by the machine control (20) actuating the working devices (A, 9, 10, 11, 12) correspondingly.

## Revendications

1. Système de commande et d'utilisation pour l'usinage d'une voie ferrée (4) avec une machine de pose de voie (1), avec au moins un châssis de machine (2) pouvant être déplacé sur des mécanismes de roulement ferroviaires (3), le système de commande et d'utilisation comprenant en outre des dispositifs de travail (A, 9, 10, 11, 12), un système de capteur et de mesure (13) pour la détermination des données de position des dispositifs de travail (A, 9, 10, 11, 12) ainsi que pour la reconnaissance d'objets de la voie ferrée (4), notamment de traverses (6), de rails (5) et éventuellement d'obstacles, comprenant par ailleurs un agencement de caméras (14) pour la détection optique des dispositifs de travail (A, 9, 10, 11, 12) et des zones de travail, **caractérisé en ce qu'**une console (15) est configurée indépendamment de l'aperçu visuel de l'utilisateur sur la zone de travail et sans zone visible libre sur un dispositif de travail respectif (A, 9, 10, 11, 12) à un endroit au sein ou en dehors de la machine de pose de voie (1) et que la console (15) comprend un dispositif d'affichage (16) pour une utilisation, commande et/ou surveillance virtuelle de la machine de pose de voie (1).

2. Système selon la revendication 1, **caractérisé en ce que** la console (15) comprend un dispositif d'affichage (16) qui est configuré pour l'affichage d'enregistrements vidéo/d'image et/ou d'informations supplémentaires en vue de l'assistance de l'utilisateur.

3. Système selon la revendication 2, **caractérisé en ce que** le dispositif d'affichage (16) est réalisé en au moins un Panel PC, un écran plat et/ou un vidéoprojecteur.

4. Système selon la revendication 3, **caractérisé en ce que** le dispositif d'affichage (16) est réalisé par le biais de Panel PC et/ou d'écrans plats avec une fonctionnalité d'écran tactile pour des saisies d'utilisateur.

5. Système selon une des revendications 1 à 4, **caractérisé en ce que** la console (15) est configurée outre d'éléments de commande (18) avec des sièges (17) pour deux utilisateurs de machine.

6. Système selon une des revendications 1 à 4, **caractérisé en ce que** la console (15) est configurée outre d'éléments de commande (18) avec un siège (17) pour un seul utilisateur de machine.

7. Système selon une des revendications 1 à 6, **caractérisé en ce que** les caméras (14) pour la détection optique des dispositifs de travail (A, 9, 10, 11, 12) et des zones de travail sont couplées à une unité de traitement (19) et celle-ci est en outre couplée au moyen d'un système informatique supérieur (21) à une commande de machine (20).

8. Système selon une des revendications 1 à 7, **caractérisé en ce que** les caméras (14) pour la détection optique sont réalisées en tant que ce qu'on appelle des caméras 3D.

9. Système selon une des revendications 1 à 8, **caractérisé en ce qu'**une forme de transmission sécurisée, notamment un tunnel VPN par le biais d'un routeur VPN, est configurée pour l'échange d'informations et de données pour la commande, l'utilisation et la surveillance de la machine de pose de voie (1) entre la console (15) et le système informatique supérieur (21).

10. Procédé d'exploitation d'un système selon une des revendications 1 à 9, **caractérisé en ce que** la machine de pose de voie (1) est utilisée, commandée et/ou surveillée virtuellement par le biais d'une console (15).

11. Procédé selon la revendication 10, **caractérisé en ce qu'**une représentation composée par le biais d'une unité de traitement (19), corrigée ainsi qu'égalisée des dispositifs de travail (A, 9, 10, 11, 12) est affichée au niveau de la console (15) par le biais du dispositif d'affichage (16) après détection des enregistrements vidéo/d'image par les caméras (14).

12. Procédé selon une des revendications 10 ou 11, **caractérisé en ce que** les enregistrements vidéo/d'image des caméras (15) sont affichés en temps réel au niveau de la console (15) par le biais du dispositif d'affichage (16).

13. Procédé selon une des revendications 10 à 12, **caractérisé en ce que** des informations, indications et/ou avertissements supplémentaires concernant le processus de travail en cours sont superposés sous forme textuelle, forme de symbole et/ou représentation traitée graphiquement de tout type au niveau de la console (15) par le biais du dispositif d'affichage (16) en vue de l'assistance de l'utilisateur.

14. Procédé selon une des revendications 10 à 13, **caractérisé en ce qu'**une évaluation et comparaison à des données prédéfinies sont menées par le biais des données de position détectées par le système de capteur et de mesure (13) par un système informatique supérieur (21), et qu'une commande entièrement automatique des dispositifs de travail (A, 9, 10, 11, 12) est réalisée par un algorithme par le biais de la commande de machine (20).

15. Procédé selon une des revendications 10 à 13, **caractérisé en ce qu'**une évaluation et comparaison à des données prédéfinies sont menées par le biais des données de position détectées par le système de capteur et de mesure (13) par un système informatique supérieur (21), et que les étapes de travail suivantes des dispositifs de travail (A, 9, 10, 11, 12) sont représentées par un algorithme sur le dispositif d'affichage (16) sous forme textuelle et/ou forme graphique et uniquement réalisées après confirmation et/ou modification par l'utilisateur de la commande de machine (20) par une commande correspondante des dispositifs de travail (A, 9, 10, 11, 12).
